(19) Europäisches Patentamt / European Patent Office / Office européen des brevets

(11) **EP 3 627 252 B1**

(12) **FASCICULE DE BREVET EUROPEEN**

(45) Date de publication et mention de la délivrance du brevet:
**06.04.2022 Bulletin 2022/14**

(21) Numéro de dépôt: **19197883.2**

(22) Date de dépôt: **17.09.2019**

(51) Classification Internationale des Brevets (IPC):
**G05B 19/4093** (2006.01)

(52) Classification Coopérative des Brevets (CPC):
**G05B 19/40937;** G05B 2219/35097;
G05B 2219/35099; G05B 2219/35107; Y02P 90/02

(54) **PROCÉDÉ DE DÉTERMINATION DU TRAJET OPTIMAL D'UN OUTIL D'USINAGE PERMETTANT D'ÉVITER LA FORMATION DE PAROIS MINCES**

VERFAHREN ZUR BESTIMMUNG DES OPTIMALEN BEWEGUNGSPFADS EINES BEARBEITUNGSWERKZEUGS, DER DIE BILDUNG VON DÜNNEN WÄNDEN VERMEIDEN KANN

METHOD FOR DETERMINING THE OPTIMAL PATH OF A MACHINING TOOL TO PREVENT THE FORMATION OF THIN WALLS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **21.09.2018 FR 1858610**

(43) Date de publication de la demande:
**25.03.2020 Bulletin 2020/13**

(73) Titulaire: **GO2CAM INTERNATIONAL**
**69007 Lyon (FR)**

(72) Inventeur: **YU, Zhan Qing**
**69006 Lyon (FR)**

(74) Mandataire: **INNOV-GROUP**
**310, avenue Berthelot**
**69372 Lyon Cedex 08 (FR)**

(56) Documents cités:
**EP-A2- 3 039 496      EP-B1- 3 039 496**
**FR-A1- 2 646 727**

## Description

## Domaine technique de l'invention

La présente invention se rapporte à un procédé de détermination du trajet d'un outil d'usinage qui permet d'éviter la formation de parois minces lors de l'usinage.

## Etat de la technique

Aujourd'hui, la fabrication d'une pièce par usinage est réalisée en employant une machine à commande numérique. La machine comporte un outil, pouvant prendre différentes formes, commandé à haute vitesse par un logiciel de FAO (Fabrication Assistée par Ordinateur) pour enlever de la matière dans un bloc de matière brut. L'enlèvement de matière est réalisé par plusieurs passes successives et éventuellement à différentes profondeurs. Dans la fabrication d'une pièce par usinage, on distingue l'usinage des poches ouvertes de l'usinage des poches fermées. La poche ouverte est directement accessible par l'outil par l'extérieur du bloc de matière. La poche fermée est circonscrite par de la matière et nécessite au préalable, avant de commencer l'usinage, d'enfoncer l'outil dans le bloc de matière. Récemment, il a été proposé d'usiner les poches ouvertes ou fermées en pilotant l'outil selon une trajectoire en spirale. Ce type de trajectoire permet en effet de tenir compte de la charge de l'outil contre la matière, améliorant ainsi sa durée de vie. La demande de brevet US2005/246052A1 décrit une telle solution. Elle prévoit de tenir compte de l'angle d'engagement de l'outil dans la matière, c'est-à-dire l'angle de contact entre l'outil et la matière à usiner. Dans ce document, le programme informatique détermine le trajet de l'outil en faisant en sorte que l'angle d'engagement de l'outil dans la matière ne dépasse jamais une valeur prédéterminée.

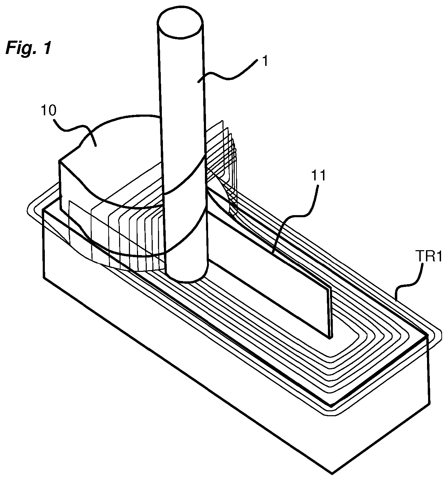

Les solutions d'usinage dites d'ébauche adaptative, telles que décrites dans la demande de brevet EP3151074A1 ou dans la demande US2005/246052A1 déjà citée ci-dessus, permettent d'enlever la matière en garantissant un effort constant sur l'outil. Ainsi, l'ébauche adaptative permet d'obtenir automatiquement un parcours sûr et efficace en optimisant les conditions de coupe. Cependant, on s'est aperçus que l'application de ce type de méthode peut présenter certains inconvénients. En effet, lors de l'usinage d'une pièce comportant un îlot (c'est-à-dire une zone autour de laquelle la matière est totalement enlevée lors de l'usinage), il existe un risque de formation de parois minces. La figure 1 illustre ce phénomène. Sur cette figure 1, on peut voir que le trajet TR1 de l'outil 1 pour usiner un îlot 10 en appliquant une méthode dite d'ébauche adaptative peut mener à la création d'une paroi mince 11, pouvant s'avérer trop fragile, dégradant ainsi les conditions de coupe par la création de vibrations qui peuvent entraîner des dommages sur l'outil, et dégradant de ce fait la qualité de la pièce finale par risque de rupture de la paroi mince sous l'action de l'outil.

La demande de brevet FR2646727A1 décrit également une solution de détermination du trajet optimal d'un outil d'usinage.

Le but de l'invention est de proposer une méthode pour déterminer le trajet d'un outil d'usinage, qui permette d'éviter la formation de parois minces lors de son application.

Cette méthode sera mise en oeuvre à l'aide d'un programme d'ordinateur destiné à être exécuté sur un ordinateur. Ce programme d'ordinateur sera préférentiellement stocké sur un support de stockage lisible par un ordinateur.

## Exposé de l'invention

Ce but est atteint par un procédé de détermination du trajet optimal d'un outil d'usinage pour la réalisation d'au moins un ilot présent dans au moins une zone d'une poche ouverte ou fermée, ledit procédé consistant à déterminer au moins un vecteur d'avancement optimal selon lequel l'outil d'usinage sera amené à effectuer des passes en lignes droites sur ladite au moins une zone, ledit procédé comportant, pour ladite au moins une zone, les étapes suivantes :

- Choix de plusieurs vecteurs d'avancement de l'outil d'usinage décalés angulairement les uns des autres par rapport à un axe fixe ;
- Pour chaque vecteur d'avancement choisi, détermination d'une aire d'usinage qui sera couverte par l'outil lors de passes en lignes droites, lesdites passes en lignes droites étant perpendiculaires au vecteur d'avancement optimal ;
- Comparaison des aires obtenues pour chaque vecteur d'avancement et détermination du vecteur d'avancement optimal pour lequel l'aire d'usinage est maximale ;

Selon une particularité, pour chaque vecteur d'avancement, l'aire correspond à l'aire de matière retirée par l'outil et délimitée dans les deux dimensions du plan du vecteur d'avancement par deux paramètres distincts :

- Un premier paramètre correspondant à la distance qui existe entre la projection orthogonale d'un premier point du profil externe de l'îlot à usiner sur un axe de direction parallèle à celle du vecteur d'avancement et la projection orthogonale d'un deuxième point du profil de la poche sur ledit axe,
- Un deuxième paramètre qui correspond à la distance qui existe entre deux points les plus éloignés du profil de la poche suivant une direction de projection orthogonale sur le vecteur d'avancement.

Selon une autre particularité, pour chaque vecteur d'avancement, il comporte une première étape de vérification si l'usinage est susceptible d'entraîner l'apparition de parois minces, ladite première étape de vérification consistant à tester si :

- $H\_i > W\_i*C$, avec h_i qui correspond audit premier paramètre et W_i correspond audit deuxième paramètre, C correspondant à un coefficient prédéfini de sorte que :

$$0.2 < C < 1$$

Selon une autre particularité, pour chaque vecteur d'avancement, il comporte une deuxième étape de vérification consistant en H_i/Ae > 2 , avec H_i correspondant audit premier paramètre et Ae correspondant à un incrément entre deux passes successives de l'outil d'usinage.

Selon une autre particularité, les vecteurs d'avancement choisis sont décalés angulairement d'un pas constant.

Selon une autre particularité, lorsque la poche à usiner comporte plusieurs îlots, il comporte une étape de détermination de plusieurs zones, chaque zone incluant un îlot distinct et en ce que chaque zone est traitée par détermination d'un ou plusieurs vecteurs d'avancement optimaux.

Selon une autre particularité, chaque zone est délimitée par une ou plusieurs tranchées modélisées pour isoler chaque îlot d'un autre îlot, ledit outil étant configuré pour suivre chaque tranchée générée.

L'invention concerne également un système de détermination du trajet optimal d'un outil d'usinage pour la réalisation d'une pièce dans une poche ouverte ou fermée, ledit trajet optimal étant réalisé suivant un vecteur d'avancement optimal selon lequel l'outil d'usinage sera amené à effectuer des passes en lignes droites, ledit système comportant :

- Un module de détermination de plusieurs vecteurs d'avancement de l'outil d'usinage décalés angulairement les uns des autres par rapport à un axe fixe ;
- Pour chaque vecteur d'avancement, un module de détermination d'une aire d'usinage qui sera couverte par l'outil lors de passes en lignes droites, lesdites passes en lignes droites étant perpendiculaires au vecteur d'avancement optimal ;
- Un module de Comparaison des aires obtenues pour chaque vecteur d'avancement et détermination du vecteur d'avancement optimal pour lequel l'aire d'usinage est maximale ;

Selon une autre particularité, pour chaque vecteur d'avancement, l'aire Z correspond à l'aire de matière retirée par l'outil et délimitée dans les deux dimensions du plan du vecteur d'avancement par deux paramètres distincts :

- Un premier paramètre correspondant à la distance qui existe entre la projection orthogonale d'un premier point du profil externe de l'îlot à usiner sur un axe de direction parallèle à celle du vecteur d'avancement et la projection orthogonale d'un deuxième point du profil de la poche sur ledit axe,
- Un deuxième paramètre qui correspond à la distance qui existe entre deux points les plus éloignés du profil de la poche suivant une direction de projection orthogonale sur le vecteur d'avancement.

Selon une autre particularité, pour chaque vecteur d'avancement, le système comporte un premier module de vérification si l'usinage est susceptible d'entraîner l'apparition de parois minces, ledit premier module de vérification étant configuré pour tester si :

- $H\_i > W\_i*C$, avec h_i qui correspond audit premier paramètre et W_i correspond audit deuxième paramètre, C correspondant à un coefficient prédéfini de sorte que :

$$0.2 < C < 1$$

Selon une autre particularité, pour chaque vecteur d'avancement, le système comporte un deuxième module de vérification configuré pour tester si H_i/Ae > 2 , avec H_i correspondant audit premier paramètre et Ae correspondant à un incrément entre deux passes successives de l'outil d'usinage.

Selon une autre particularité, les vecteurs d'avancement choisis sont décalés angulairement d'un pas constant.

Selon une autre particularité, lorsque la poche à usiner comporte plusieurs îlots, il comporte un module de détermination de plusieurs zones, chaque zone incluant un îlot distinct et en ce que chaque zone est traitée par détermination d'un ou plusieurs vecteurs d'avancement optimaux.

Selon une autre particularité, chaque zone est délimitée par une ou plusieurs tranchées modélisées par ledit module de détermination de zones pour isoler chaque îlot d'un autre îlot, ledit outil étant configuré pour suivre chaque tranchée générée.

L'invention concerne également un programme d'ordinateur comprenant des modules logiciels destinés à être exécutés sur un ordinateur pour mettre en oeuvre le procédé tel que défini ci-dessus.

L'invention concerne enfin un support de stockage lisible par un ordinateur comportant le programme d'ordinateur défini ci-dessus.

**Brève description des figures**

D'autres caractéristiques et avantages vont apparaître dans la description détaillée qui suit faite en regard des figures annexées listées ci-dessous :

- La figure 1 illustre le principe d'usinage d'un îlot en utilisant une méthode classique dite d'ébauche adaptative.
- La figure 2 représente un synoptique illustrant l'algorithme exécuté pour la mise en œuvre du procédé de l'invention.
- Les figures 3A à 3H illustrent les différentes étapes de mise en oeuvre du procédé de l'invention.
- La figure 4 illustre le principe de l'invention appliqué sur une pièce qui comporte plusieurs îlots à usiner.

**Description détaillée d'au moins un mode de réalisation**

L'invention concerne un procédé mis en oeuvre par une machine à commande numérique. Le procédé de l'invention permet de déterminer le trajet TR1 d'un outil 1 d'usinage de la machine à commande numérique. Il est réalisé grâce à un programme informatique exécuté par une unité de traitement de la machine ou associée à celle-ci. Il est mémorisé dans ladite unité de traitement sur un support mémoire lisible. Tous les types de supports, intégrés à la machine ou dans une unité de traitement distincte, amovibles ou accessibles à travers un réseau de communication, et classiquement utilisés pour mémoriser un programme informatique, pourront être envisagés.

Le bloc de matière brute à partir duquel la pièce est obtenue peut présenter une forme initiale quelconque.

A titre d'exemple, la pièce finale est destinée à comporter au moins une poche ouverte ou fermée et au moins un îlot susceptible de générer des parois minces lors de l'usinage de la poche (îlot = partie insulaire ou presque insulaire autour de laquelle la matière doit être retirée).

Le principe de l'invention consiste notamment, après l'isolation de chaque îlot dans la poche ouverte ou fermée, à réaliser un usinage de la poche en lignes droites sur une ou plusieurs zones en laissant un ou plusieurs îlots et en évitant la formation de parois minces lors de l'usinage.

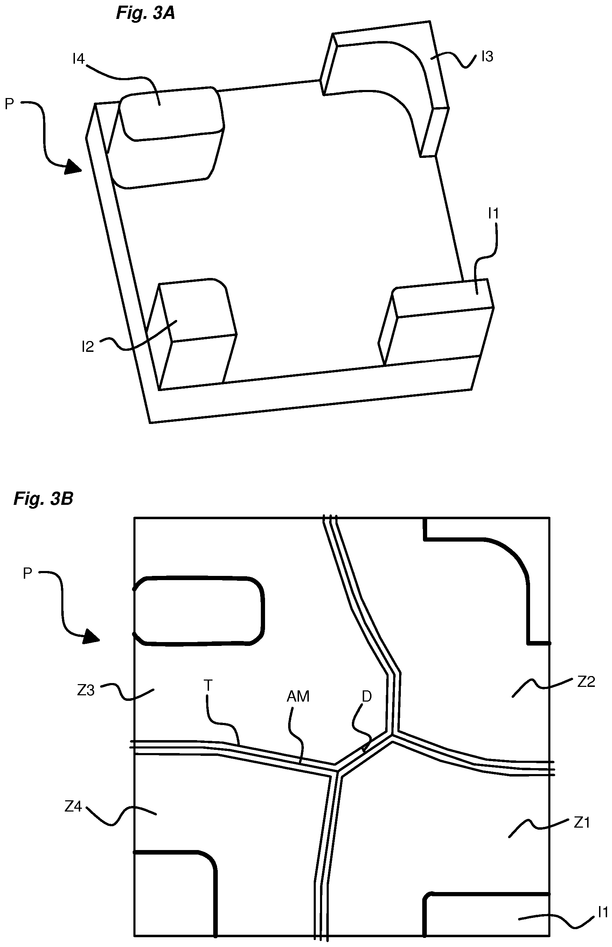

On verra ci-après, en liaison avec la figure 3B, que lorsque la poche comporte plusieurs îlots, le procédé de l'invention consiste à générer des tranchées pour isoler chaque îlot l'un de l'autre. Si la pièce comporte quatre îlots I1, I2, I3, I4 (comme sur la figure 3A), des tranchées T sont ainsi définies par l'unité de traitement pour séparer les quatre îlots et ainsi obtenir quatre zones Z1 à Z4 distinctes à usiner (figure 3B). L'unité de traitement est ensuite configurée pour traiter chaque zone de manière indépendante. Elle va ainsi déterminer quel sera le trajet de l'outil pour usiner chacune de ces quatre zones. Pour modéliser les tranchées T, l'unité de traitement peut appliquer un diagramme de Voronoi.

Sur les figures annexées, le trajet de l'outil calculé est représenté par les lignes référencées TR1.

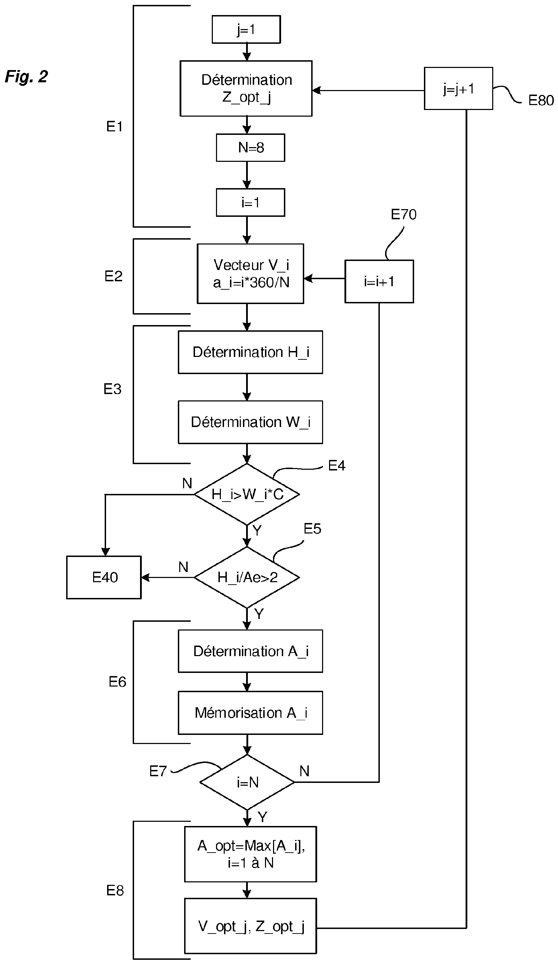

Le procédé de l'invention est mis en oeuvre en appliquant l'algorithme défini sur la figure 2. Cet algorithme s'applique de manière distincte pour chaque zone Zx définie sur la pièce, la pièce comportant autant de zones qu'elle a d'îlots Ix. On verra ci-après que l'unité de traitement est en effet configurée pour diviser la pièce en x zones.

Une zone Zx de la pièce est traitée par l'unité de traitement de la manière suivante :

Dans cette zone Zx, une zone Z_opt_j à usiner est définie par un vecteur d'avancement dit optimal V_opt_j pour l'outil d'usinage. Sur cette zone Z_opt_j, le trajet TR1 suivi par l'outil consistera en plusieurs passes en lignes droites, qui sont perpendiculaires au vecteur d'avancement optimal qui a été déterminé.

A titre d'exemple et de manière non limitative, le vecteur d'avancement optimal sera celui pour lequel la surface de matière retirée sera maximale. Bien entendu, il serait possible de prévoir un autre critère de choix.

Pour déterminer cette première zone Z_opt_j à usiner, définie par un premier vecteur d'avancement optimal V_opt_j, l'unité de traitement met en oeuvre une boucle de traitement, telle que représentée sur la figure 2.

Cette boucle comporte les étapes E1 à E80 décrites ci-dessous pour ce qui est de l'usinage d'un îlot de la pièce, désigné I1.

**Etape E1**

Cette étape concerne l'initialisation de plusieurs paramètres.

Comme, il s'agit de la première zone Z_opt_j à usiner, j est donc initialisé à 1.

L'unité de traitement va choisir plusieurs vecteurs faisant chacun un angle différent avec un axe fixe (par exemple l'axe X horizontal sur les figures annexées). De manière non limitative, les vecteurs peuvent être définis en découpant le secteur de 360° en N parts égales. Ainsi chaque vecteur $V\_i$ fait un angle $a\_i$ défini par :

$$a\_i = i*360/N$$

A titre d'exemple, on choisit N=8. On aura ainsi les vecteurs $V\_i$ suivants :

$V\_1$ avec $a\_1=45°$, $V\_2$ avec $a\_2=90°$, $V\_3$ avec $a\_3=135°$, $V\_4$ avec $a\_4=180°$, $V\_5$ avec $a\_5=225°$, $V\_6$ avec $a\_6=270°$, $V\_7$ avec $a\_7=315°$, $V\_8$ avec $a\_8=360°$

Le nombre N peut être pré-mémorisé dans l'unité de traitement.

Pour le premier vecteur, i est donc initialisé 1.

**Etape E2**

On détermine donc un premier vecteur $V\_i$ défini par l'angle $a\_i = i*360/N$.

**Etape E3**

Pour chaque vecteur $V\_i$, l'unité de traitement détermine l'aire $A\_i$ de matière que l'outil sera en mesure de retirer en suivant ce vecteur $V\_i$.

Cette aire est notamment définie par deux paramètres désignés $H\_i$ et $W\_i$. Ces paramètres permettent en effet de délimiter la zone $Z\_i$ dans deux dimensions du plan du vecteur d'avancement.

Le paramètre $H\_i$ correspond à une distance qui existe entre la projection orthogonale d'un premier point du profil externe de l'îlot sur un axe de direction parallèle à celle du vecteur d'avancement $V\_i$ et la projection orthogonale d'un deuxième point du profil de la poche sur ledit axe.

Le profil de la poche correspond au contour externe de la pièce contenant l'îlot à usiner, décalé du rayon de l'outil. On verra que ce profil peut être délimité par une ou plusieurs tranchées générées pour isoler un îlot par rapport aux autres îlots de la pièce. Le profil de l'îlot est défini pour sa part par le contour de l'îlot décalé du rayon R de l'outil.

Le premier point $H\_i\_1$ est déterminé en réalisant la projection orthogonale de tous les points du profil de l'îlot à réaliser sur ledit axe et correspond au point pour lequel le produit scalaire généré avec le vecteur d'avancement $V\_i$ est maximal.

Le deuxième point $H\_i\_2$ est déterminé en réalisant la projection scalaire de tous les points du profil de la poche sur ledit axe et correspond au point pour lequel le produit scalaire généré avec le vecteur d'avancement $V\_i$ est maximal.

Le paramètre $W\_i$ correspond pour sa part à la distance maximale qui existe entre deux points $W\_i\_1$ et $W\_i\_2$ appartenant au profil de la poche et qui sont les plus éloignés, en suivant une direction de projection orthogonale au vecteur d'avancement $V\_i$.

**Etape E4**

Selon un aspect particulier de l'invention, l'unité de traitement peut exécuter deux tests distincts afin de déterminer la nécessité ou non de réaliser des passes en lignes droites pour usiner autour de l'îlot.

Selon un premier test, il s'agit de vérifier si l'usinage de la zone $Z\_i$ définie par $H\_i$ et $W\_i$ est susceptible d'entraîner l'apparition de parois minces si l'usinage est réalisé classiquement par l'une des méthodes dites d'ébauche adaptative. Pour cela, l'unité de traitement détermine si $H\_i > W\_i*C$, avec C correspondant à un coefficient prédéfini, par exemple de sorte que :

$$0.2 < C < 1$$

Si la relation $H\_i > W\_i*C$ n'est pas vérifiée, alors l'unité de traitement en conclut qu'il n'est pas nécessaire de réaliser des passes en lignes droites pour cette zone $Z\_i$. L'unité de traitement sera donc amenée à ne pas tenir compte de cette zone $Z\_i$ défini par un vecteur $V\_i$ particulier (Etape E40). La zone pourra être usinée selon un autre principe (par exemple de type "ébauche adaptative"). Si la relation est vérifiée, l'unité de traitement peut déterminer l'aire $A\_i$ de la zone $Z\_i$ afin que celle_ci soit comparée aux autres aires déterminées pour chaque autre vecteur d'avancement.

**Etape E5**

Le deuxième test consiste, pour la zone $Z\_i$, à vérifier la relation suivante :

$$H\_i/Ae > 2$$

Dans laquelle $H\_i$ correspond à la dimension définie ci-dessus de la zone $Z\_i$ et Ae correspond à l'incrément entre deux passes. Autrement dit, cette relation sert à vérifier si l'usinage de la zone $Z\_i$ nécessite au moins deux passes. Si la relation n'est pas vérifiée, l'unité de traitement ne retient pas le vecteur $V\_i$ correspondant. L'usinage sera réalisé selon l'étape E30 définie ci-dessus. Si la relation est vérifiée, l'unité de traitement pourra comparer l'aire $A\_i$ obtenue avec les autres aires obtenues pour chaque autre vecteur d'avancement $V\_i$.

**Etape E6**

Ensuite, l'unité de traitement détermine l'aire $A\_i$ de matière qui sera retirée par l'outil en suivant ce vecteur d'avancement $V\_i$. Cette aire sera délimitée par $H\_i$ en hauteur et $W\_i$ en largeur.

L'aire balayée par l'outil suivant le vecteur d'avancement $V\_i$ est la somme des aires algébriques de l'ensemble de courbes (toutes sont fermées) de la zone $Z\_i$. Pour calculer l'aire de la zone $Z\_i$, l'unité de traitement détermine l'aire définie par le profil externe de la poche et par la largeur $W\_i$.

L'unité de traitement mémorise ensuite la valeur obtenue pour $A\_i$.

**Etape E7+E70**

L'unité de traitement recommence l'opération pour chaque vecteur $V\_i$ jusqu'à ce que i=N.

**Etape E8**

L'unité de traitement compare toutes les valeurs obtenues pour $A\_i$ avec i allant de 1 à N et retient celle ($A\_opt\_j$) pour laquelle la valeur est maximale.

L'unité de traitement détermine ainsi le vecteur $V\_opt\_j$ pour lequel l'aire $A\_i$ est maximale. La zone $Z\_opt\_j$ à usiner correspond ainsi à ce vecteur $V\_opt\_j$.

**Etape E80**

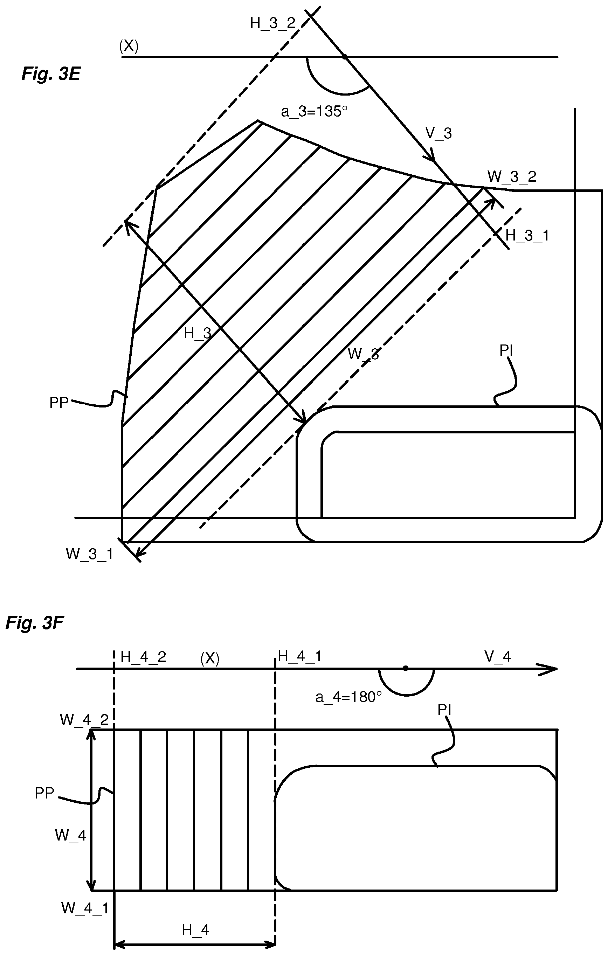

Une fois la zone Z_opt_j à usiner définie, l'unité de traitement recommence pour déterminer une autre zone Z_opt_j (avec j=j+1) à usiner en lignes droites, comme illustré sur la figure 3F en retirant de ses calculs la zone Z_opt_j déjà calculée.

Selon un aspect particulier de l'invention, si la poche comporte plusieurs îlots (I1, I2, I3, I4) comme on peut le voir sur la figure 3A, l'unité de traitement est configurée pour découper la poche en plusieurs parties de manière à ce que chaque zone Z1, Z2, Z3, Z4 de la poche ne comporte qu'un seul îlot I1, I2, I3, I4. Pour cela, l'unité de traitement génère des tranchées T entre chaque îlot.

Il est préférable de créer les tranchées T suivant l'axe médian entre les parois de la pièce. Le diagramme de Voronoi peut notamment être utilisé pour définir la géométrie des axes. La largeur d'une tranchée T est définie par un paramètre utilisateur mais doit être au moins supérieure au diamètre de l'outil.

Ensuite, une valeur prédéfinie est utilisée comme largeur pour chaque tranchée T.

Les figures 3A à 3H permettent de mettre en évidence le principe décrit ci-dessus en liaison avec la figure 2.

**Figure 3A**

Sur la figure 3A, on peut voir que la pièce à usiner comporte quatre îlots I1, I2, I3, I4 définissant ainsi quatre zones Z1, Z2, Z3, Z4 à usiner.

**Figure 3B et 3H**

Sur la figure 3B, des tranchées T sont ainsi définies par l'unité de traitement pour séparer les quatre îlots et ainsi obtenir les quatre zones Z1 à Z4 distinctes à usiner. L'unité de traitement est alors configurée pour traiter chaque zone de manière indépendante. Elle va ainsi déterminer quel sera le trajet de l'outil pour usiner chacune de ces quatre zones. Pour modéliser les tranchées T, l'unité de traitement peut appliquer un diagramme de Voronoi.

De manière plus précise, pour la génération des tranchées, T, en référence à la figure 3B, on distingue deux étapes distinctes :

- La création de l'enveloppe (zone, poche) de tranchée ;

- L'usinage de tranchée ;

Pour la création de la zone de tranchée, l'unité de traitement met en oeuvre les étapes suivantes :

- Générer des profils en décalant le contour de la pièce (défini par le contour des îlots I1, I2, I3, I4) à usiner du rayon de l'outil ;

- Calculer l'axe médian AM entre les profils générés précédemment ; Pour cela il est possible de construire un diagramme de Voronoi sur les profils générés, en ne conservant que les arêtes (du diagramme) entre deux profils différents ;

- Une zone de tranchée est construite en décalant chaque axe médian AM de part et d'autre d'une dimension D avec D= 0.5 x largeur tranchée voulue ;

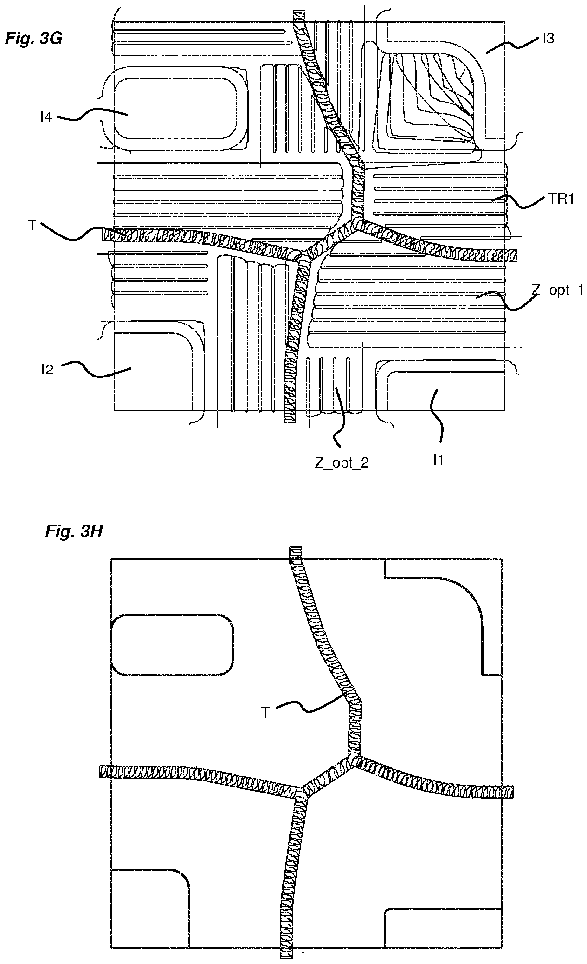

En ce qui concerne l'usinage des tranchées T générées par l'unité de traitement, celles-ci pourront être réalisées par une technologie classique de type "ébauche adaptative". La figure 3H illustre le principe d'usinage de chaque tranchée T modélisée selon cette technologie connue.

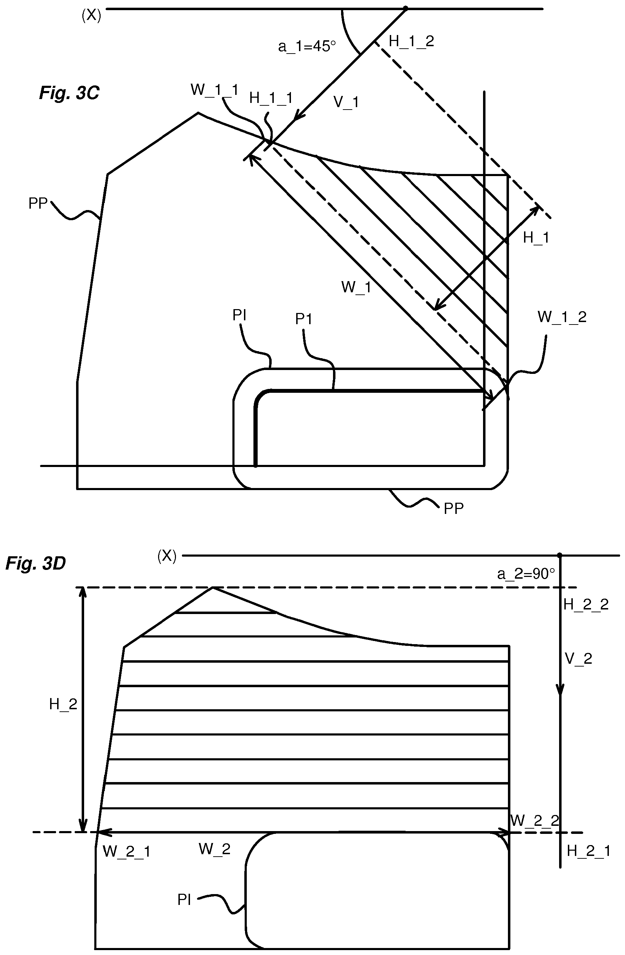

Sur les figures 3C à 3F, on s'intéresse à une seule zone de la pièce générée lors de l'étape précédente, celle-ci correspondant à la zone Z1 qui comporte l'îlot I1 de la pièce.

Comme décrit ci-dessus, on a choisi N=8, donc l'unité de traitement va effectuer la boucle pour les huit vecteurs V_i suivants :

V_1 avec a_1=45°, V_2 avec a_2=90°, V_3 avec a_3=135°, V_4 avec a_4=180°, V_5 avec a_5=225°, V_6 avec a_6=270°, V_7 avec a_7=315°, V_8 avec a_8=360°

Pour simplifier, seuls les trois premiers vecteurs V_1 à V_3 sont représentés sur les figures 3C, 3D, 3E.

**Figure 3C**

Sur la figure 3C, on détermine ainsi les point H_1_1 et H_1_2. Le point H_1_1 correspond à la projection orthogonale sur un axe parallèle au vecteur V_1 d'un point du profil de l'îlot (PI - c'est-à-dire contour de l'îlot décalé du rayon R de l'outil). Le point H_1_2 correspond à la projection orthogonale sur ledit axe d'un point du profil de la poche (PP - c'est-à-dire contour de la poche décalée du rayon R de l'outil). H_1 correspond à la distance entre ces deux points. Les deux points sont ceux qui permettraient d'obtenir une aire maximale couverte par l'outil sans usiner l'îlot et sans sortir de la poche.

Les deux points W_1_1 et W_1_2 sont également reportés sur cette figure 3C. Ils permettent de déterminer le paramètre W_1 pour le vecteur V_1 d'avancement.

**Figures 3D, 3E**

Le même principe est appliqué pour les vecteurs V_2, V_3 représentés sur les figures 3D et 3E Les différents paramètres sont reportés sur la figure avec l'indice i correspondant, c'est-à-dire i=2 pour la figure 3D, i=3 pour la figure 3E. Les mêmes opérations sont également mises en oeuvre pour i=4 jusqu'à i=8 (non représentées).

Ensuite, l'unité de traitement détermine pour quel vecteur d'avancement, l'aire couverte par l'outil d'usinage est maximale et désigne ce vecteur comme le vecteur d'avancement optimal V_opt_1 (avec j=1 pour la première zone Z1).

Pour le cas exposé ci-dessus, on peut voir sur la figure 3G que le vecteur d'avancement optimal calculé correspond à i=2.

**Figure 3F**

Une fois cette première zone traitée, l'unité de traitement la retire de son traitement et redémarre une modélisation du trajet de l'outil avec j=2. La figure 3F illustre le principe de l'invention pour j=2 et avec un vecteur d'avancement optimal défini par i=4.

**Figure 3G**

La figure 3G montre les trajets TR1 d'outil modélisés en suivant le principe de l'invention pour usiner la pièce définie initialement. Chaque zone séparée d'une autre par une tranchée T, peut être usinée en appliquant plusieurs itérations j (avec j au moins égal à 1) du procédé de l'invention. On peut ainsi voir que la zone Z1 est usinée en appliquant deux itérations (j=2) du procédé de l'invention. Sur cette figure, on peut également voir le trajet suivi par l'outil pour générer les tranchées T.

**Figure 3H**

Comme évoqué précédemment, cette figure montre uniquement le trajet suivi par l'outil pour créer chaque tranchée T modélisée par l'unité de traitement lors de l'étape réalisée en liaison avec la figure 3B. Pour cela, il peut suivre une méthode d'usinage dite d'ébauche adaptative.

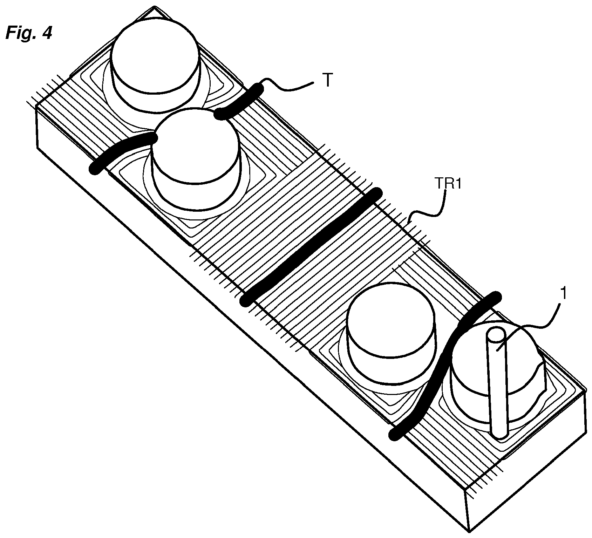

La figure 4 illustre une autre réalisation de pièce à l'aide du procédé de l'invention.

Dans tous les cas, une fois le trajet TR1 de l'outil calculé, l'unité de traitement commande l'outil pour effectuer les passes calculées selon le trajet déterminé.

Le procédé de l'invention présente de nombreux avantages, parmi lesquels :

- Il est simple à mettre en œuvre ;

- Il permet d'assurer un usinage de pièces, sans création de parois minces, et dons sans risquer une casse de la pièce ;

**Revendications**

1. Procédé de détermination du trajet optimal d'un outil d'usinage pour la réalisation d'au moins un ilot présent dans au moins une zone d'une poche ouverte ou fermée, **caractérisé en ce qu'**il consiste à déterminer au moins un vecteur d'avancement optimal (V_opt_j) selon lequel l'outil d'usinage sera amené à effectuer des passes en lignes droites sur ladite au moins une zone, ledit procédé comportant, pour ladite au moins une zone, les étapes suivantes :

   - Choix de plusieurs vecteurs d'avancement (V_i) de l'outil d'usinage décalés angulairement les uns des autres par rapport à un axe fixe (X) ;
   - Pour chaque vecteur d'avancement choisi, détermination d'une aire d'usinage (A_i) qui sera couverte par l'outil lors de passes en lignes droites, lesdites passes en lignes droites étant perpendiculaires au vecteur d'avancement optimal ;
   - Comparaison des aires obtenues pour chaque vecteur d'avancement et détermination du vecteur d'avancement optimal (V_opt_j) pour lequel l'aire d'usinage est maximale.

2. Procédé selon la revendication 1, **caractérisé en ce que** pour chaque vecteur d'avancement (V_i), l'aire correspond à l'aire de matière retirée par l'outil et délimitée dans les deux dimensions du plan du vecteur d'avancement par deux paramètres distincts :

   - Un premier paramètre (H_i) correspondant à la distance qui existe entre la projection orthogonale d'un premier point du profil externe de l'îlot à usiner sur un axe de direction parallèle à celle du vecteur d'avancement (V_i) et la projection orthogonale d'un deuxième point du profil de la poche sur ledit axe,
   - Un deuxième paramètre (W_i) qui correspond à la distance qui existe entre deux points les plus éloignés du profil de la poche suivant une direction de projection orthogonale sur le vecteur d'avancement (V_i).

3. Procédé selon la revendication 1 ou 2, **caractérisé en ce que**, pour chaque vecteur d'avancement, il comporte une première étape de vérification si l'usinage est susceptible d'entraîner l'apparition de parois minces, ladite première étape de vérification consistant à tester si :

   - H_i > W_i*C, avec h_i qui correspond audit premier paramètre et W_i correspond audit deuxième paramètre, C correspondant à un coefficient prédéfini de sorte que :

$$0.2 < C < 1$$

4. Procédé selon la revendication 3, **caractérisé en ce que**, pour chaque vecteur d'avancement, il comporte une deuxième étape de vérification consistant en H_i/Ae > 2 , avec H_i correspondant audit premier paramètre et Ae correspondant à un incrément entre deux passes successives de l'outil d'usinage.

**5.** Procédé selon l'une des revendications 1 à 4, **caractérisé en ce que** les vecteurs d'avancement choisis sont décalés angulairement d'un pas constant.

**6.** Procédé selon l'une des revendications 1 à 5, **caractérisé en ce que** lorsque la poche à usiner comporte plusieurs îlots, il comporte une étape de détermination de plusieurs zones (Zx), chaque zone incluant un îlot distinct et **en ce que** chaque zone est traitée par détermination d'un ou plusieurs vecteurs d'avancement optimaux (V_opt_j).

**7.** Procédé selon la revendication 6, **caractérisé en ce que** chaque zone est délimitée par une ou plusieurs tranchées modélisées pour isoler chaque îlot d'un autre îlot, ledit outil étant configuré pour suivre chaque tranchée générée.

**8.** Système de détermination du trajet optimal d'un outil d'usinage pour la réalisation d'une pièce dans une poche ouverte ou fermée, ledit trajet optimal étant réalisé suivant un vecteur d'avancement optimal (V_opt_j) selon lequel l'outil d'usinage sera amené à effectuer des passes en lignes droites, **caractérisé en ce qu'**il comporte :

- Un module de détermination de plusieurs vecteurs d'avancement (V_i) de l'outil d'usinage décalés angulairement les uns des autres par rapport à un axe fixe (X) ;
- Pour chaque vecteur d'avancement, un module de détermination d'une aire d'usinage (A_i) qui sera couverte par l'outil lors de passes en lignes droites, lesdites passes en lignes droites étant perpendiculaires au vecteur d'avancement optimal ;
- Un module de Comparaison des aires obtenues pour chaque vecteur d'avancement et détermination du vecteur d'avancement optimal pour lequel l'aire d'usinage est maximale ;

**9.** Système selon la revendication 8, **caractérisé en ce que** pour chaque vecteur d'avancement (V_i), l'aire correspond à l'aire de matière retirée par l'outil et délimitée dans les deux dimensions du plan du vecteur d'avancement par deux paramètres distincts :

- Un premier paramètre (H_i) correspondant à la distance qui existe entre la projection orthogonale d'un premier point du profil externe de l'îlot à usiner sur un axe de direction parallèle à celle du vecteur d'avancement (V_i) et la projection orthogonale d'un deuxième point du profil de la poche sur ledit axe,
- Un deuxième paramètre (W_i) qui correspond à la distance qui existe entre deux points les plus éloignés du profil de la poche suivant une direction de projection orthogonale sur le vecteur d'avancement (V_i).

**10.** Système selon la revendication 8 ou 9, **caractérisé en ce que**, pour chaque vecteur d'avancement, il comporte un premier module de vérification si l'usinage est susceptible d'entraîner l'apparition de parois minces, ledit premier module de vérification étant configuré pour tester si :

- $H\_i > W\_i * C$, avec h_i qui correspond audit premier paramètre et W_i correspond audit deuxième paramètre, C correspondant à un coefficient prédéfini de sorte que :

$$0.2 < C < 1$$

**11.** Système selon la revendication 10, **caractérisé en ce que**, pour chaque vecteur d'avancement, il comporte un deuxième module de vérification configuré pour tester si $H\_i / Ae > 2$ , avec H_i correspondant audit premier paramètre et Ae correspondant à un incrément entre deux passes successives de l'outil d'usinage.

**12.** Système selon l'une des revendications 8 à 11, **caractérisé en ce que** les vecteurs d'avancement choisis sont décalés angulairement d'un pas constant.

**13.** Système selon l'une des revendications 8 à 12, **caractérisé en ce que** lorsque la poche à usiner comporte plusieurs îlots, il comporte un module de détermination de plusieurs zones (Zx), chaque zone incluant un îlot distinct et **en ce que** chaque zone est traitée par détermination d'un ou plusieurs vecteurs d'avancement optimaux (V_opt_j).

**14.** Système selon la revendication 13, **caractérisé en ce que** chaque zone est délimitée par une ou plusieurs tranchées (T) modélisées par ledit module de détermination de zones pour isoler chaque îlot d'un autre îlot, ledit outil étant configuré pour suivre chaque tranchée générée.

**15.** Programme d'ordinateur comprenant des modules logiciels destinés à être exécutés sur un ordinateur pour mettre en œuvre le procédé tel que défini dans l'une des revendications 1 à 7.

**16.** Support de stockage lisible par un ordinateur comportant le programme d'ordinateur défini dans la revendication 15.

**Patentansprüche**

1. Verfahren zur Bestimmung des optimalen Wegs eines Bearbeitungswerkzeugs zur Herstellung mindestens einer Insel, die in mindestens einer Zone einer offenen oder geschlossenen Tasche vorhanden ist, **dadurch gekennzeichnet, dass** es darin besteht, mindestens einen optimalen Vorschubvektor (V_opt_j) zu bestimmen, gemäß dem das Bearbeitungswerkzeug veranlasst wird, geradlinige Durchgänge auf der mindestens einen Zone auszuführen, wobei das Verfahren für die mindestens eine Zone die folgenden Schritte aufweist:

   - Wahl mehrerer Vorschubvektoren (V_i) des Bearbeitungswerkzeugs, die bezüglich einer ortsfesten Achse (X) winkelmäßig zueinander versetzt sind;
   - für jeden gewählten Vorschubvektor, Bestimmung eines Bearbeitungsbereichs (A_i), der vom Werkzeug bei geradlinigen Durchgängen abgedeckt wird, wobei die geradlinigen Durchgänge lotrecht zum optimalen Vorschubvektor sind;
   - Vergleich der für jeden Vorschubvektor erhaltenen Bereiche und Bestimmung des optimalen Vorschubvektors (V_opt_j), für den der Bearbeitungsbereich maximal ist.

2. Verfahren nach Anspruch 1, **dadurch gekennzeichnet, dass** für jeden Vorschubvektor (V_i) der Bereich dem Bereich von durch das Werkzeug entferntem Werkstoff entspricht und der in den zwei Dimensionen der Ebene des Vorschubvektors durch zwei unterschiedliche Parameter begrenzt wird:

   - einem ersten Parameter (H_i) entsprechend dem zwischen der orthogonalen Projektion eines ersten Punkts des Außenprofils der zu bearbeitenden Insel auf eine Achse einer Richtung parallel zu derjenigen des Vorschubvektors (V_i) und der orthogonalen Projektion eines zweiten Punkts des Profils der Tasche auf die Achse existierenden Abstand,
   - einem zweiten Parameter (W_i), der dem Abstand entspricht, der zwischen zwei am weitesten entfernten Punkten des Profils der Tasche gemäß einer orthogonalen Projektionsrichtung auf den Vorschubvektor (V_i) existiert.

3. Verfahren nach Anspruch 1 oder 2, **dadurch gekennzeichnet, dass** es für jeden Vorschubvektor einen ersten Prüfschritt aufweist, ob die Bearbeitung möglicherweise zum Entstehen dünner Wände führt, wobei der erste Prüfschritt darin besteht, zu testen ob:

   - H_i > W_i*C, wobei h_i dem ersten Parameter und W_i dem zweiten Parameter entspricht, C einem vordefinierten Koeffizienten entspricht, so dass gilt:

$$0.2 < C < 1.$$

4. Verfahren nach Anspruch 3, **dadurch gekennzeichnet, dass** es für jeden Vorschubvektor einen zweiten Prüfschritt aufweist, der aus H_i/Ae > 2 besteht, wobei H_i dem ersten Parameter und Ae einem Inkrement zwischen zwei aufeinanderfolgenden Durchgängen des Bearbeitungswerkzeug entspricht.

5. Verfahren nach einem der Ansprüche 1 bis 4, **dadurch gekennzeichnet, dass** die gewählten Vorschubvektoren winkelmäßig um eine konstante Teilung versetzt sind.

6. Verfahren nach einem der Ansprüche 1 bis 5, **dadurch gekennzeichnet, dass** es, wenn die zu bearbeitende Tasche mehrere Inseln aufweist, einen Schritt der Bestimmung mehrerer Zonen (Zx) aufweist, wobei jede Zone eine unterschiedliche Insel umfasst, und dass jede Zone durch Bestimmung eines oder mehrerer optimaler Vorschubvektoren (V_opt_j) behandelt wird.

7. Verfahren nach Anspruch 6, **dadurch gekennzeichnet, dass** jede Zone von einem oder mehreren modellisierten Gräben begrenzt wird, um jede Insel von einer anderen Insel zu isolieren, wobei das Werkzeug konfiguriert ist, jedem erzeugten Graben zu folgen.

8. System zur Bestimmung des optimalen Wegs eines Bearbeitungswerkzeugs zur Herstellung eines Bauteils in einer offenen oder geschlossenen Tasche, wobei der optimale Weg gemäß einem optimalen Vorschubvektor (V_opt_j) hergestellt wird, gemäß dem das Werkzeug veranlasst wird, geradlinige Durchgänge auszuführen, **dadurch gekennzeichnet, dass** es aufweist:

   - ein Modul zur Bestimmung mehrerer Vorschubvektoren (V_i) des Bearbeitungswerkzeugs, die bezüglich einer ortsfesten Achse (X) winkelmäßig zueinander versetzt sind;
   - für jeden Vorschubvektor, ein Modul zur Bestimmung eines Bearbeitungsbereichs (A_i), der vom Werkzeug bei geradlinigen Durchgängen abgedeckt wird, wobei die geradlinigen Durchgänge lotrecht zum optimalen Vorschubvektor sind;
   - ein Modul zum Vergleich der für jeden Vorschubvektor erhaltenen Bereiche und Bestimmung des optimalen Vorschubvektors, für den der Bearbeitungsbereich maximal ist.

9. System nach Anspruch 8, **dadurch gekennzeichnet, dass** für jeden Vorschubvektor (V_i) der Bereich dem Bereich von durch das Werkzeug entferntem Werkstoff entspricht und der in den zwei Dimensionen der Ebene des Vorschubvektors durch zwei unterschiedliche Parameter begrenzt wird:

- einem ersten Parameter (H_i) entsprechend dem zwischen der orthogonalen Projektion eines ersten Punkts des Außenprofils der zu bearbeitenden Insel auf eine Achse einer Richtung parallel zu derjenigen des Vorschubvektors (V_i) und der orthogonalen Projektion eines zweiten Punkts des Profils der Tasche auf die Achse existierenden Abstand,
- einem zweiten Parameter (W_i), der dem Abstand entspricht, der zwischen zwei am weitesten entfernten Punkten des Profils der Tasche gemäß einer orthogonalen Projektionsrichtung auf den Vorschubvektor (V_i) existiert.

10. System nach Anspruch 8 oder 9, **dadurch gekennzeichnet, dass** es für jeden Vorschubvektor ein erstes Prüfmodul aufweist, ob die Bearbeitung möglicherweise zum Auftritt dünner Wände führt, wobei das erste Prüfmodul konfiguriert ist, zu testen ob:

- H_i > W_i*C, wobei h_i dem ersten Parameter und W_i dem zweiten Parameter entspricht, C einem vordefinierten Koeffizienten entspricht, so dass gilt:

$$0.2 < C < 1.$$

11. System nach Anspruch 10, **dadurch gekennzeichnet, dass** es für jeden Vorschubvektor ein zweites Prüfmodul aufweist, das konfiguriert ist, zu testen, ob gilt H_i/Ae > 2, wobei H_i dem ersten Parameter und Ae einem Inkrement zwischen zwei aufeinanderfolgenden Durchgängen des Bearbeitungswerkzeug entspricht.

12. System nach einem der Ansprüche 8 bis 11, **dadurch gekennzeichnet, dass** die gewählten Vorschubvektoren winkelmäßig um eine konstante Teilung versetzt sind.

13. System nach einem der Ansprüche 8 bis 12, **dadurch gekennzeichnet, dass** es, wenn die zu bearbeitende Tasche mehrere Inseln aufweist, ein Modul zur Bestimmung mehrerer Zonen (Zx) aufweist, wobei jede Zone eine unterschiedliche Insel umfasst, und dass jede Zone durch Bestimmung eines oder mehrerer optimaler Vorschubvektoren (V_opt_j) behandelt wird.

14. System nach Anspruch 13, **dadurch gekennzeichnet, dass** jede Zone von einem oder mehreren vom Bestimmungsmodul von Zonen modellisierten Gräben (T) begrenzt wird, um jede Insel von einer anderen Insel zu isolieren, wobei das Werkzeug konfiguriert ist, jedem erzeugten Graben zu folgen.

15. Computerprogramm, das Softwaremodule aufweist, die dazu bestimmt sind, auf einem Computer ausgeführt zu werden, um das wie in einem der Ansprüche 1 bis 7 definierte Verfahren durchzuführen.

16. Computerlesbarer Speicherträger, der das in Anspruch 15 definierte Computerprogramm aufweist.

**Claims**

1. Method for determining the optimal path of a machining tool for the production of at least one island present in at least one zone of an open or closed pocket, **characterized in that** it consists in determining at least one optimal advance vector (V_opt_j) according to which the machining tool will be brought to perform straight-line passes over said at least one zone, said method comprising, for said at least one zone, the following steps:

- choosing several advance vectors (V_i) for the machining tool offset angularly from one another with respect to a fixed axis (X);
- for each chosen advance vector, determining a machining area (A_i) which will be covered by the tool during straight-line passes, said straight-line passes being at right angles to the optimal advance vector;
- comparing areas obtained for each advance vector and determining the optimal advance vector (V_opt_j) for which the machining area is maximal.

2. Method according to Claim 1, **characterized in that**, for each advance vector (V_i), the area corresponds to the area of material removed by the tool and delimited in the two dimensions of the plane of the advance vector by two distinct parameters:

- a first parameter (H_i) corresponding to the distance which exists between the orthogonal projection of a first point of the outer profile of the island to be machined on an axis of direction parallel to that of the advance vector (V_i) and the orthogonal projection of a second point of the profile of the pocket on said axis,
- a second parameter (W_i) which corresponds to the distance which exists between two points furthest away from the profile of the pocket in a direction of projection orthogonal to the advance vector (V_i).

3. Method according to Claim 1 or 2, **characterized in that**, for each advance vector, it comprises a first step of checking whether the machining is likely to lead to the appearance of thin walls, said first checking step consisting in testing whether:

- $H\_i > W\_i*C$, with h_i which corresponds to said first parameter and W_i corresponds to said second parameter, C corresponding to a predefined coefficient such that:

$$0.2 < C < 1$$

4. Method according to Claim 3, **characterized in that**, for each advance vector, it comprises a second checking step consisting of $H\_i/Ae > 2$, with H_i corresponding to said first parameter and Ae corresponding to an increment between two successive passes of the machining tool.

5. Method according to one of Claims 1 to 4, **characterized in that** the advance vectors chosen are offset angularly by a constant pitch.

6. Method according to one of Claims 1 to 5, **characterized in that**, when the pocket to be machined comprises several islands, it comprises a step of determining several zones (Zx), each zone including a distinct island and **in that** each zone is processed by determining one or more optimal advance vectors (V_opt_j).

7. Method according to Claim 6, **characterized in that** each zone is delimited by one or more trenches modelled to isolate each island from another island, said tool being configured to follow each trench generated.

8. System for determining the optimal path of a machining tool for the production of a part in an open or closed pocket, said optimal path being realized according to an optimal advance vector (V_opt_j) according to which the machining tool will be brought to perform straight-line passes, **characterized in that** it comprises:

- a module for determining several advance vectors (V_i) of the machining tool offset angularly from one another with respect to a fixed axis (X);
- for each advance vector, a module for determining a machining area (A_i) which will be covered by the tool during straight-line passes, said straight-line passes being at right angles to the optimal advance vector;
- a module for comparing areas obtained for each advance vector and determining the optimal advance vector for which the machining area is maximal.

9. System according to Claim 8, **characterized in that**, for each advance vector (V_i), the area corresponds to the area of material removed by the tool and delimited in the two dimensions of the plane of the advance vector by two distinct parameters:

- a first parameter (H_i) corresponding to the distance which exists between the orthogonal projection of a first point of the outer profile of the island to be machined on an axis of direction parallel to that of the advance vector (V_i) and the orthogonal projection of a second point of the profile of the pocket on said axis,
- a second parameter (W_i) which corresponds to the distance which exists between two points furthest away from the profile of the pocket in a direction of projection orthogonal to the advance vector (V_i).

10. System according to Claim 8 or 9, **characterized in that**, for each advance vector, it comprises a first module for checking whether the machining is likely to lead to the appearance of thin walls, said first checking module being configured to test whether:

- $H\_i > W\_i*C$, with h_i which corresponds to said first parameter and W_i corresponds to said second parameter, C corresponding to a predefined coefficient such that:

$$0.2 < C < 1$$

11. System according to Claim 10, **characterized in that**, for each advance vector, it comprises a second checking module configured to test whether $H\_i/Ae > 2$, with H_i corresponding to said first parameter and Ae corresponding to an increment between two successive passes of the machining tool.

12. System according to one of Claims 8 to 11, **characterized in that** the advance vectors chosen are offset angularly by a constant pitch.

13. System according to one of Claims 8 to 12, **characterized in that**, when the pocket to be machined comprises several islands, it comprises a module for determining several zones (Zx), each zone including a distinct island, and **in that** each zone is processed by determining one or more optimal advance vectors (V_opt_j).

14. System according to Claim 13, **characterized in that** each zone is delimited by one or more trenches (T) modelled by said module for determining zones to isolate each island from another island, said tool being configured to follow each trench generated.

15. Computer program comprising software modules intended to be run on a computer to implement the method as defined in one of Claims 1 to 7.

16. Computer-readable storage medium comprising the computer program defined in Claim 15.

Fig. 1

**Fig. 2**

**Fig. 3A**

**Fig. 3B**

**Fig. 3C**

**Fig. 3D**

**Fig. 3E**

H_3_2

(X)

a_3=135°

V_3

W_3_2

H_3_1

H_3

W_3

PI

PP

W_3_1

**Fig. 3F**

H_4_2    (X)    H_4_1    V_4

a_4=180°    PI

W_4_2

PP

W_4

W_4_1

H_4

**Fig. 3G**

I4

I3

TR1

T

Z_opt_1

I2

Z_opt_2    I1

**Fig. 3H**

T

*Fig. 4*

T

TR1

1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- US 2005246052 A1
- EP 3151074 A1
- FR 2646727 A1